**Europäisches Patentamt**

**European Patent Office**

**Office européen des brevets**

(19)

(11) Veröffentlichungsnummer : **0 367 001 B1**

# EUROPÄISCHE PATENTSCHRIFT

(12)

(45) Veröffentlichungstag der Patentschrift :
**12.08.92 Patentblatt 92/33**

(51) Int. Cl.$^5$ : **B64G 1/40**, F17C 13/00

(21) Anmeldenummer : **89119121.5**

(22) Anmeldetag : **14.10.89**

(54) **Treibstofftank zur Lagerung aggressiver Flüssigkeiten.**

(30) Priorität : **02.11.88 DE 3837137**

(43) Veröffentlichungstag der Anmeldung :
**09.05.90 Patentblatt 90/19**

(45) Bekanntmachung des Hinweises auf die
Patenterteilung :
**12.08.92 Patentblatt 92/33**

(84) Benannte Vertragsstaaten :
**FR GB IT**

(56) Entgegenhaltungen :
**EP-A- 0 132 175**
**FR-A- 2 182 503**
**FR-A- 2 372 642**
**GB-A- 2 109 760**
**US-A- 2 940 518**
**US-A- 4 595 398**

(73) Patentinhaber : **ERNO Raumfahrttechnik**
**Gesellschaft mit beschränkter Haftung**
**Hünefeldstrasse 1-5**
**W-2800 Bremen 1 (DE)**

(72) Erfinder : **Bruhn, Hansdieter**
**Pellwormer Strasse 51**
**W-2800 Bremen 66 (DE)**

Jouve, 18, rue Saint-Denis, 75001 PARIS

## Beschreibung

Die Erfindung bezieht sich auf einen Treibstofftank zur Lagerung aggressiver Flüssigkeiten nach dem Oberbegriff des Anspruchs 1.

Bei Satelliten ist es bekannt, diese in bestimmten Relativlagen, z.B. gegenüber der Erde, zu halten, damit diese ihre Aufgaben, insbesondere Nachrichtenverbindungen aufrechtzuerhalten, erfüllen können. Es ist daher notwendig Satelliten mit Lageregelungseinrichtungen zu versehen, um Korrekturen in allen Freiheitsgraden vornehmen zu können. Für diesen Zweck werden Kleintriebwerke eingesetzt, welche durch genau dosierte Impulse die Korrekturbewegungen ermöglichen. Der Betrieb dieser Kleintriebwerke erfordert aber Treibstoff, welcher in Treibstofftanks mitgeführt werden muß. Bei den Treibstoffen handelt es sich meistens um flüssige Treibstoffe, die über Gaserzeuger die Triebwerke mit dem erforderlichen Treibstoff versorgen.

Beim Betrieb solcher Triebwerke muß allerdings dafür gesorgt werden, daß diese Triebwerke nur die benötigten Treibstoffe, d.h. keine Fremdgase erhalten, denn zum Austreiben der Treibstoffe aus einem Tank werden im allgemeinen Treibgase verwendet. Da sich aber die Treibgase mit den Treibstoffen vermischen können, ist es notwendig, insbesondere für Treibstofftanks welche die Oberflächenspannung zur Treibstoffförderung ausnutzen, besondere Vorkehrungen zur Trennung zu treffen. Als hinreichend für diesen Zweck haben sich dabei engmaschige Siebe erwiesen, welche an Sammelvorrichtungen oder Sammelbehältern in den Treibstofftanks vorgesehen sind.

Da die Triebwerke zur Lageregelung der Satelliten sowohl in schwerelosen Situationen als auch Situationen mit Schwerkraft betrieben werden müssen, ist es notwendig die Treibstofftanks so auszulegen, daß Treibstoff bei jeder beliebigen Situation zur Verfügung steht. Dieser Anforderung werden aber die bekannten Treibstofftanks nicht gerecht.

Wie aus der EP-A-0 132 175 hervogeht, ist es bei Treibstoffbehältern für Raumfahrzeuge bekannt Sammelgefäße für den unter Druck förderbaren Treibhstoff einzusetzen um den Treibstoff sowohl bei Schwerelosigkeit als auch beim Auftreten von Schwerkräften zu fördern. Das aus dieser Druckschrift bekannte Sammelgefäß ist aber nicht in der Lage den Treibstoff beim Auftreten von Schwerkräften aus allen möglichen Richtungen zu halten.

Der Erfindung liegt daher die Aufgabe zugrunde, einen Treibstofftank der eingangs genannten Art zu schaffen, der in der Lage ist, Treibstoff unter allen nur möglichen Einsatzbedingungen zu fördern. Diese Aufgabe ist erfindungsgemäß durch die Kennzeichenmerkmale des Anspruchs 1 gelöst.

Der erfindungsgemäße Treibstofftank ist mit einer Sammelvorrichtung versehen, die aus einem zweiseitig offenen Behälter besteht, welcher durch seine Form und zwar durch seine Begrenzungswände, in der Lage ist, Treibstoff zu halten und bei fehlender sowie vorhandener Schwerkraft für Lageregelungszwecke zu liefern. Weiterbildungen und vorteilhafte Ausgestaltungen der Erfindung sind den Ansprüchen 2 bis 5 zu entnehmen.

Die Erfindung wird anhand der Zeichnung näher erläutert. Es zeigen:

Fig. 1 einen Treibstofftank im Schnitt und

Fig. 2 einen Schnitt II-II gemäß Fig.1

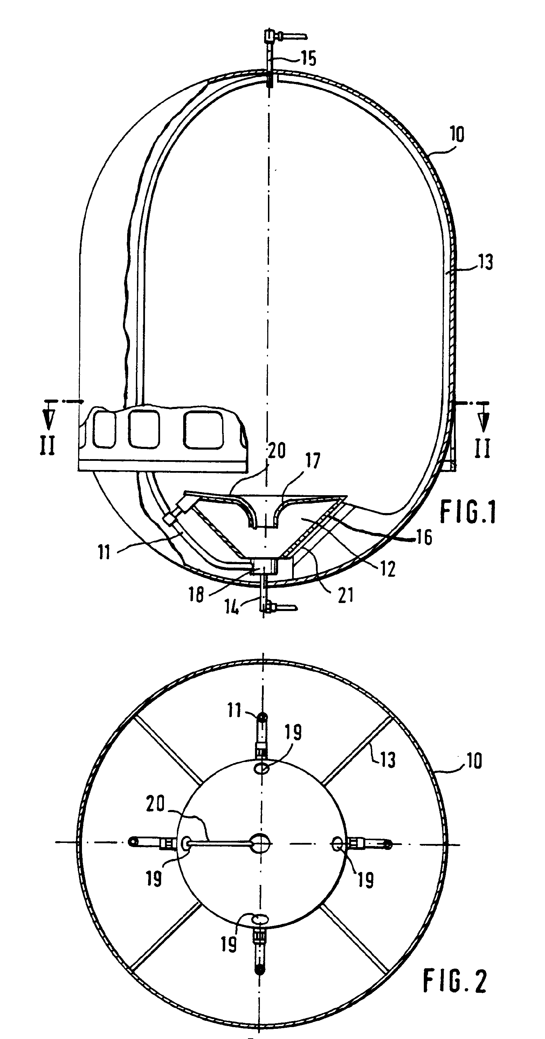

In den Darstellungen nach Fig. 1 und Fig. 2 ist ein kugelförmiger Treibstofftank 10 abgebildet, der in seinem Inneren ein Rohrleitungssystem 11, eine Sammelvorrichtung 12 und Leitbleche 13 aufweist. Außerdem ist der Treibstofftank 10 mit einem Stutzen 14 zur Treibstoffentnahme sowie einem Stutzen 15 zur Entlüftung bzw. Zuführung von Treibgas versehen. Die Leitbleche 13 sind an der Innenwand des Treibstofftanks 10 verlegt und bilden im Bereich der Stutzen 14, 15 ein Kreuz. Im Bereich des zur Treibstoffentnahme vorgesehenen Stutzens 14 sind die Leitbleche 13 derart geformt, daß sich eine kegelförmige Aufnahme für die darin einsetzbare konusförmige Sammelvorrichtung 12 ergibt. Die Sammelvorrichtung 12 besteht aus einer Außenwand 16 in Kegelstumpfform und einer Innenwand 17 in Kegelstumpfform. Beide Wände sind an ihren größten Durchmessern fest miteinander verbunden, haben unterschiedliche Winkel und die jeweils kleineren Durchmesser bilden Öffnungen. Beide Wände sind darüber hinaus so miteinander verbunden, daß der Kegel der gekrümmten Innenwand 17 in den aus der Außenwand 16 sich ergebenden Kegelstumpfkörper hineinragt.

Zum Fördern des flüssigen Treibstoffes ist auf der Innenseite des Stutzens 14 ein mit einem engmaschigen Sieb vesehenes Sammelgefäß 18 vorgesehen, das einerseits mit dem Stutzen 14 in Verbindung steht und andererseits praktisch in die Öffnung der Außenwand 16 hineinragt. Für das Sammelgefäß 18 kann das aus der DE-35 20 676 C2 bekannte Gefäß benutzt werden. Von dem Sammelgefäß 18 gehen vier Rohre aus, die das Rohrleitungssystem 11 bilden, und die jeweils in mit dem Sammelgefäß 18 vergleichbaren Sammelgefäßen 19 enden. Die Sammelgefäße 19 liegen gleichmäßig verteilt in der Außenwand 16 der Sammelvorrichtung 12 und zwar im Bereich des größten Durchmessers. Von der Öffnung der Innenwand 17 führt ein dünnes zur Entlüftung dienendes Rohr 20 zur Verbindungsstelle mit der Außenwand 16, und zwar außerhalb der Sammelvorrichtung 12.

Im Einsatz gewährleistet die Sammelvorrichtung 12 innerhalb des Treibstofftanks 10 bei allen denkbaren Einsatzbedingungen die Versorgung des Triebwerke mit Treibstoff. In der Sammelvorrichtung 12 sammelt sich der Treibstoff aufgrund der Oberflächenspannung und der Kapillarkräfte, und zwar in dem Ringraum zwischen Außenwand 16 und Innenwand 17. Bei Beschleunigungen in jeweils einer der drei Raumachsen kann der Treibstoff aufgrund der Formgebung der Sammelvorrichtung diese nicht bzw. nur im beschränkten Umfang verlassen, so daß bei Bedarf Treibstoff stets in der Sammelvorrichtung 12 zur Verfügung steht. Die Leitbleche 13 sichern nach einer Entnahme von Treibstoff und zwar ebenfalls aufgrund der Oberflächenspannung und der Kapillarkräfte eine Wiederauffüllung der Sammelvorrichtung und zwar dadurch, daß der Treibstoff zur Sammelvorrichtung aufgrund der Kapillarkräfte geführt wird. Daher steht der Treibstoff bis zu seiner völligen Entnahme stets zur Verfügung. Innerhalb der Sammelvorrichtung befinden sich nach außen weisende Leitbleche 21, welche die Wiederauffüllung der Sammelvorrichtung sicherstellen.

## Patentansprüche

1. Treibstofftank zur Lagerung agressiver Flüssigkeiten insbesondere Treibstoffe zum Betrieb von Triebwerken für Satelliten, mit einem sowohl zum Füllen als auch zum Entnehmen dienenden Anschlußstutzen, welcher innerhalb des Tankes mit einer Sammelvorrichtung und Leitblechen zum blasenfreien Abpumpen unter schwerelosen Bedingungen zusammenwirkt, dadurch gekennzeichnet, daß die Sammelvorrichtung (12) aus einem zweiseitig offenen Behälter mit verschiedenen konusförmigen an ihren größeren Durchmessern miteinander verbundenen Begrenzungswänden (16, 17) besteht, daß die kleineren Durchmesser der ineinander ragenden konusförmigen Begrenzungswände (16, 17) die Öffnungen aufweisen und eine der Öffnungen in unmittelbarer Nähe zu einem am Anschlußstutzen (14) angebrachten und ein Kapillarsieb aufweisendes Sammelgefäß (18) angeordnet ist, daß über ein Rohrleitungssystem (11) mit weiteren im Bereich der größeren Durchmesser in den konusförmigen Berenzungswänden (16, 17) angeordneren und Kapillarsiebe aufweisenden Sammelgefäßen (19) verbunden ist.

2. Treibstofftank nach Anspruch 1, dadurch gekennzeichnet, daß die beiden konusförmigen Begrenzungswände (16, 17) verschiedene Kegelwinkel besitzen.

3. Treibstofftank nach Anspruch 1, dadurch gekennzeichnet, daß die konusförmigen Begrenzungswände (16, 17) eine Kegelstumpfform bzw. eine Kegelstumpfform mit gegrümmtem Verlauf aufweisen.

4. Treibstofftank nach einem der Ansprüche 1 bis 3, dadurch gekennzeichnet, daß von einer Öffnung der zweiseitig offenen Sammelvorrichtung (12) ein Entlüftungsrohr (20) ausgeht.

5. Treibstofftank nach einem der Ansprüche 1 bis 4, dadurch gekennzeichnet, daß der Sammelvorrichtung (12) vier ein Kreuz bildende an der Innenwand des Treibstofftanks (10) verlaufende Leitbleche (13) zugeordnet sind, welche die Sammelvorrichtung (12) im Kreuz aufnehmen und fixieren.

6. Treibstofftank nach einem der Ansprüche 1 bis 5, dadurch gekennzeichnet, daß zwei konusförmige Sammelvorrichtungen (12) an ihren kleineren Durchmessern zu einer gemeinsamen Sammelvorrichtung verbunden sind.

## Claims

1. Fuel tank for the storage of aggressive liquids, in particular fuels for operating propulsion units for satellites, with a connection piece used both for filling and removing, which acts inside the tank in combination with a collecting device and guide plates to effect bubble-free pumping out in weightless conditions, characterized in that the collecting device (12) consists of a vessel open on two sides with different cone-shaped boundary walls (16, 17) connected to one another at their greater diameters, that the smaller diameters of the cone-shaped boundary walls (16, 17) projecting into one another have openings and one of the openings is arranged in the immediate vicinity of a receptacle (18) mounted on the connection piece (14) and having a capillary screen which is connected by means of a pipework system (11) to other receptacles (19) arranged in the area of the greater diameters in the cone-shaped boundary walls (16, 17) and having capillary screens.

2. Fuel tank according to claim 1, characterized in that the two cone-shaped boundary walls (16, 17) have different cone angles.

3. Fuel tank according to claim 1, characterized in that the cone-shaped boudary walls (16, 17) have a truncated cone shape or a truncated cone shape with a curved progression.

4. Fuel tank according to one of claims 1 to 3, characterized in that a ventilating pipe (20) emerges from one opening of the collecting device (12) open on two sides.

5. Fuel tank according to one of claims 1 to 4, characterized in that related to the collecting device (12) are four guide plates (13) extending on the inner wall of the fuel tank (10) forming a cross, which take up and fix the collecting device (12) in position in the cross.

6. Fuel tank according to one of claims 1 to 5, characterized in that two cone-shaped collecting devices (12) are connected at their smaller diameters to form a common collecting device.

## Revendications

1. Réservoir de combustible pour le stockage de liquides agressifs en particulier de liquides pour faire fonctionner des propulseurs pour satellites, avec un ajutage de raccordement servant aussi bien au remplissage qu'à l'extraction, ajutage qui coopère à l'intérieur du réservoir avec un dispositif collecteur et des tôles de guidage d'extraction sans bulles dans des conditions d'apesanteur, réservoir de combustible caractérisé en ce que le dispositif collecteur (12) consiste en un récipient ouvert des deux côtés avec des parois de délimitation (16, 17) différentes, de forme conique, reliées ensemble sur leurs plus grands diamètres, en ce que les plus petits diamètres des parois de délimitation (16, 17) en forme de cône s'interpénétrant présentent des ouvertures et l'une des ouvertures est disposée directement au voisinage d'un récipient collecteur (18) disposé sur l'ajutage de raccordement (14) et présentant un tamis capillaire, en ce que ce récipient collecteur (18) est relié par l'intermédiaire d'un système de canalisation (11) avec d'autres réservoirs collecteurs (19) disposés dans la zone du plus grand diamètre dans les parois (16, 17) de délimitation de forme conique et présentant des passoires capillaires.

2. Réservoir de combustible selon la revendication 1, caractérisé en ce que les deux parois de délimitation de forme conique ont des angles de cône différents (16, 17).

3. Réservoir de combustible selon la revendication 1, caractérisé en ce que les parois de délimitation (16, 17) de forme conique présentent une forme tronconique ou une forme tronconique avec un développement recourbé.

4. Réservoir de combustible selon l'une des revendications 1 à 3, caractérisé en ce qu'un tube d'évacuation de l'air (20) part d'une ouverture du dispositif collecteur (12) ouvert des deux côtés.

5. Réservoir de combustible selon l'une des revendications 1 à 4, caractérisé en ce que quatre tôles directrices, formant une croix, s'étendant sur la paroi intérieure du réservoir de combustible (10), sont associées au dispositif collecteur (12), tôles qui reçoivent et fixent en croix le dispositif collecteur (12).

6. Réservoir de combustible selon l'une des revendications 1 à 5, caractérisé en ce que deux dispositifs collecteurs de forme conique (12) sont unis par leurs plus petits diamètres en un dispositif collecteur commun.

FIG.1

FIG.2